Europäisches Patentamt

European Patent Office

Office européen des brevets

Publication number: **0 236 041**
**A2**

## EUROPEAN PATENT APPLICATION

Application number: **87301568.9**

Int. Cl.⁴: **B 60 B 15/26**

Date of filing: **24.02.87**

Priority: **25.02.86 JP 40841/86**
**13.03.86 JP 55450/86**
**22.12.86 JP 307133/86**

Date of publication of application:
**09.09.87 Bulletin 87/37**

Designated Contracting States:
**AT BE CH DE ES FR GB GR IT LI LU NL SE**

Applicant: **Kabushiki Kaisha Tohdoh Koumuten**
**3-2-20, Harada-Dohri Nada**
**Kobe Hyogo (JP)**

Inventor: **Tohdoh, Atuyoshi**
**3-2-20 Harada-Dohri**
**Nada Kobe Hyogo (JP)**

Representative: **Charlton, Peter John et al**
**Elkington and Fife High Holborn House 52/54 High**
**Holborn**
**London WC1V 6SH (GB)**

Spike device for vehicles and control mechanism thereof.

A spike device for vehicles comprises a main casing with a rim which is attached together with a wheel integrally to a wheel hub. The main casing has a pressure tube attached to the rim and a plurality of spikes radially provided outside the peripheral surface of the pressure tube. These spikes project a little outward beyond the tire tread surface of the wheel when a compressed air is supplied to the pressure tube and retract inward beyond the tire tread surface of the wheel when the compressed air in the pressure tube is exhausted.

EP 0 236 041 A2

**Description**

SPIKE DEVICE FOR VEHICLES AND CONTROL MECHANISM THEREOF

BACKGROUND OF THE INVENTION

1. Field of the Invention

This invention relates to a spike device for vehicles which is attached together with a wheel integrally to a wheel hub and includes retractable spikes, and to a control mechanism for controlling the spike device from the inside of a vehicle.

2. Description of the Prior Art

In cold northern districts, the road tends to freeze, or snow staying on the road tends to be pressed to result in the frozen state. In view of such circumstances, when to drive the vehicle in the cold northern district it is necessary to increase the power of grip with the road in the frozen state. According to the prior art, three methods are known for increasing the power of grip with the road in the frozen state; a first method is to equip the vehicle with spike tires in place of the ordinary tires ( which mean herein normal tires, radial tires, and the like other than spike tires ), a second method is to fit chains on the ordinary tires, and a third method is to equip the vehicle with the spike tires with the chains fitted thereon. In this respect, almost all the conventional spike tires are of the type wherein the tread portion of the tire has spikes integrally embedded therein.

If the spike tires are previously equipped in place of the ordinary tires, a troublesome work is unnecessary for replacing the ordinary tires with the spike tires when the running shifts from on an unfrozen road onto another road in the frozen state. However, if the running is effected on the normal unfrozen road using the spike tires previously equipped, there arises the problem that the spikes shave off asphalt or concrete on the road surface to make the cause of dust pollution. Even through this problem of dust has been examined in cold northern cities and the like to bring about an urgent reform measure, the present situation is that an effective meausre of settling the problem has not yet been found. Also, in the case of a road having tiles spread over the surface thereof, there is the drawback that these tiles are destroyed by the spikes. Further, in the case of the spike tire, there is the problem that noise is generated when the spikes come to contact with the road surface.

On the other hand, in case of increasing the power of grip with the road in the frozen state by fitting the chain on the ordinary tire, it is necessary to jack up each wheel to be fitted with the chain, this work being troublesome. In addition, the work of fitting the chain on each ordinary tire cannot be achieved simply, hence, the overall fitting process is complicated. Further, in case of using the chain, remarkably large vibration and noise are generated during the running, thereby resulting in the drawback that no comfortable feeling of running is obtained.

Of course, in case of increasing the power of grip with the road in the frozen state using the spike tire with the chain fitted thereon, this involves both the problem arising in equipping the spike tire in place of the ordinary tire and the problem arising in fitting the chain on the ordinary tire.

SUMMARY OF THE INVENTION

In view of the foregoing problems of the prior art, the present invention has been devised to improve and overcome these problems.

That is, the object of the present invention is to provide a spike device whose spikes are projectable outward and retractable inward by supplying a compressed air to a pressure tube provided inside a main casing attached together with a wheel integrally to a wheel hub and exhausting the compressed air therefrom, and a control mechanism of the spike device which permits arbitrarily the control of supply of the compressed air to the pressure tube of the spike device and of exhaust of the compressed air therefrom from the inside of a vehicle.

To achieve the foregoing object, the present invention provides a spike device which comprises a main casing attached together with a wheel integrally to a wheel hub, a rim provided inside the main casing, a pressure tube attached to the rim inside the main casing, and a plurality of spikes radially provided outside the peripheral surface of the pressure tube, wherein the spikes project a little outward beyond the tire tread surface of the wheel when a compressed air is supplied to the pressure tube and a retract inward beyond the tire tread surface of the wheel when the compressed air in the pressure tube is exhausted.

The present invention provides also a control mechanism of a spike device comprising a main casing with a rim attached together with a wheel integrally to a wheel hub, a pressure tube attached to the rim inside the main casing, and a plurality of spikes provided on the outer peripheral surface of the pressure tube. The control mechanism comprises a compressor, an electromagnetic valve controlled on/off by a main switch provided in the inside of a vehicle for controlling supply of a compressed air given from the compressor, and a rotary joint fixed in the central section of the main casing whose one end is connected with the pressure tube with the other end connected with the electromagnetic valve, wherein the compressed air pressure inside the pressure tube is controlled through the switching operation of the main switch.

Describing briefly the action of the present invention, as will be apparent from embodiments shown in Figs. 1 through 6, when to run on the road in the frozen state, a main switch 33 attached to an instrument panel 32 of a driver's seat 31 or the like is switched on. As a result, an electromagnetic valve 37 is actuated to cause an air tank 38 of a compressor 36 and a pressure tube 19 ( or 50 ) to communicate with each other via a rotary joint 41. Thus, a compressed air is supplied from the compressor 36 and its air tank 38 to the pressure tube 19 ( or 50 ). In response thereto, the pressure tube 19 of the first embodiment shown in Figs. 3 and 4 pushes operating levers 13 outward to cause spikes 15 provided at the distal ends thereof to project beyond a tread surface 2a of a tire 2. In the case of the second embodiment shown in Figs. 5 and 6, the pressure tube 50 itself expands outward to cause spikes 52 embedded in the outer peripheral surface 50a of the pressure tube to project beyond the tread surface 2a of the tire 2. Therefore, in either embodiment, at the time of running on the road in the frozen state, a large grip force is obtained by the spike device A and a stable running state of the vehicle is realized.

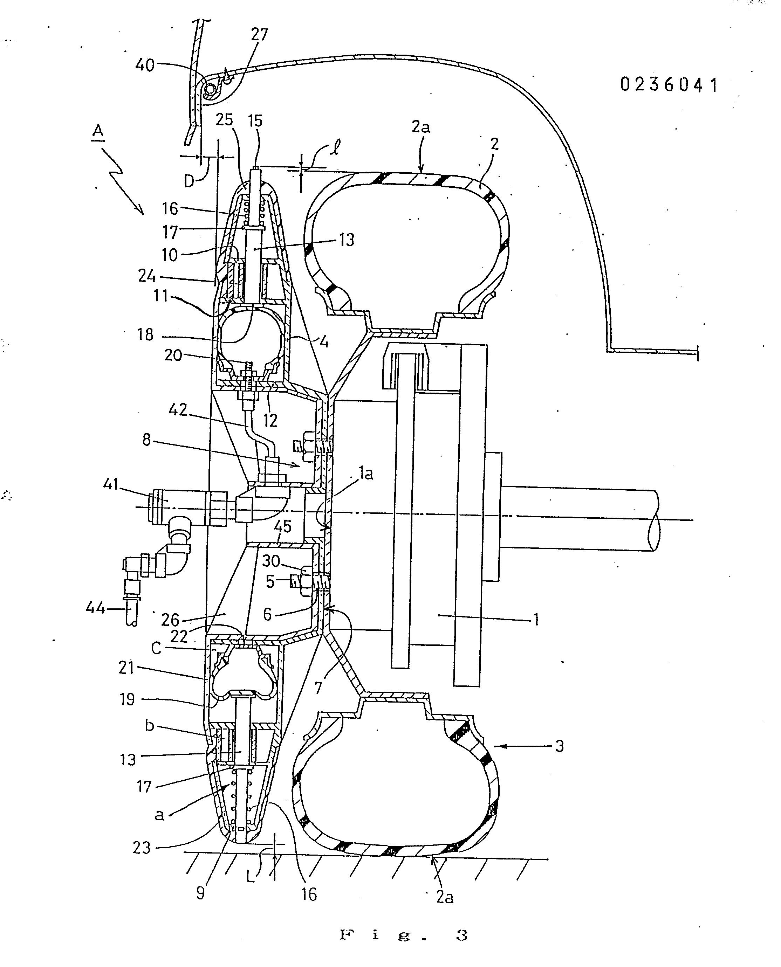

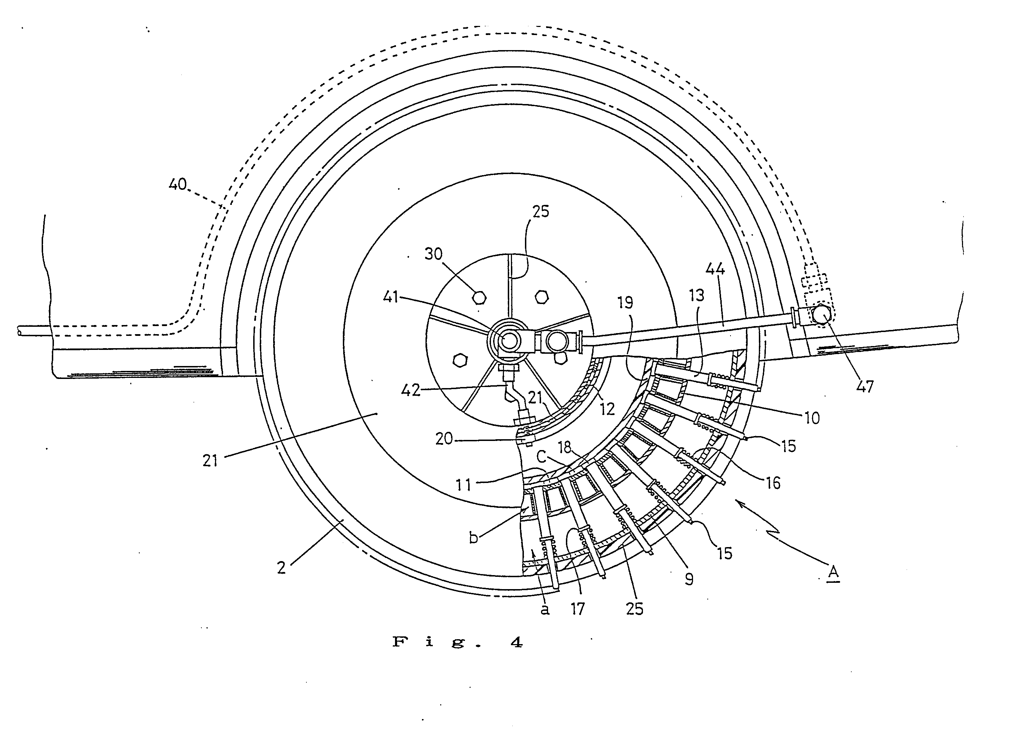

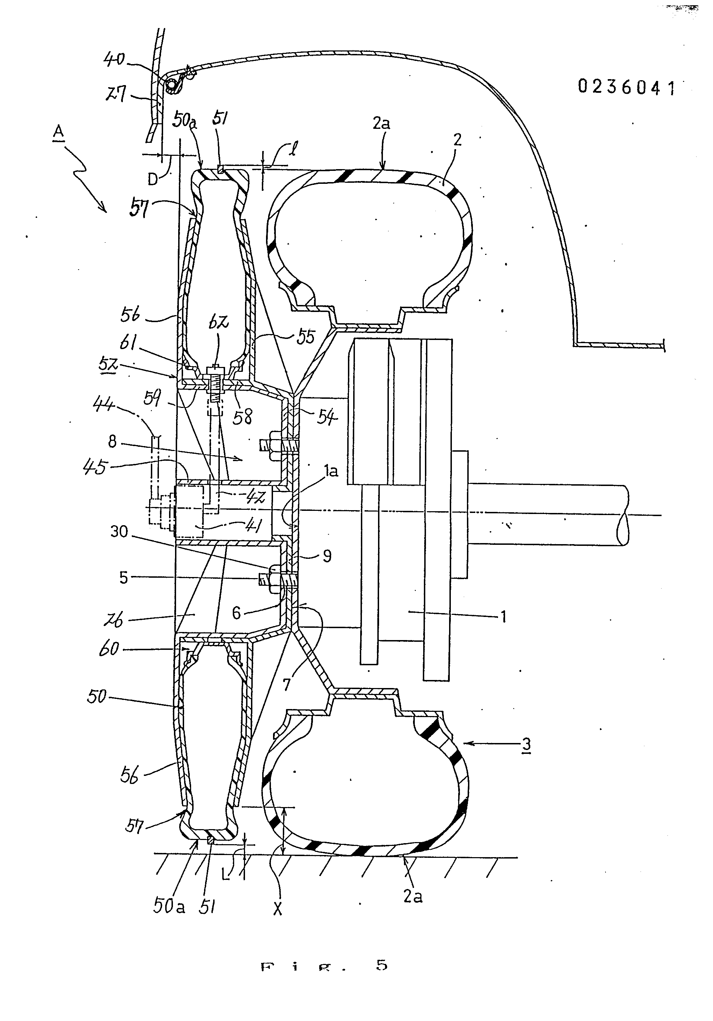

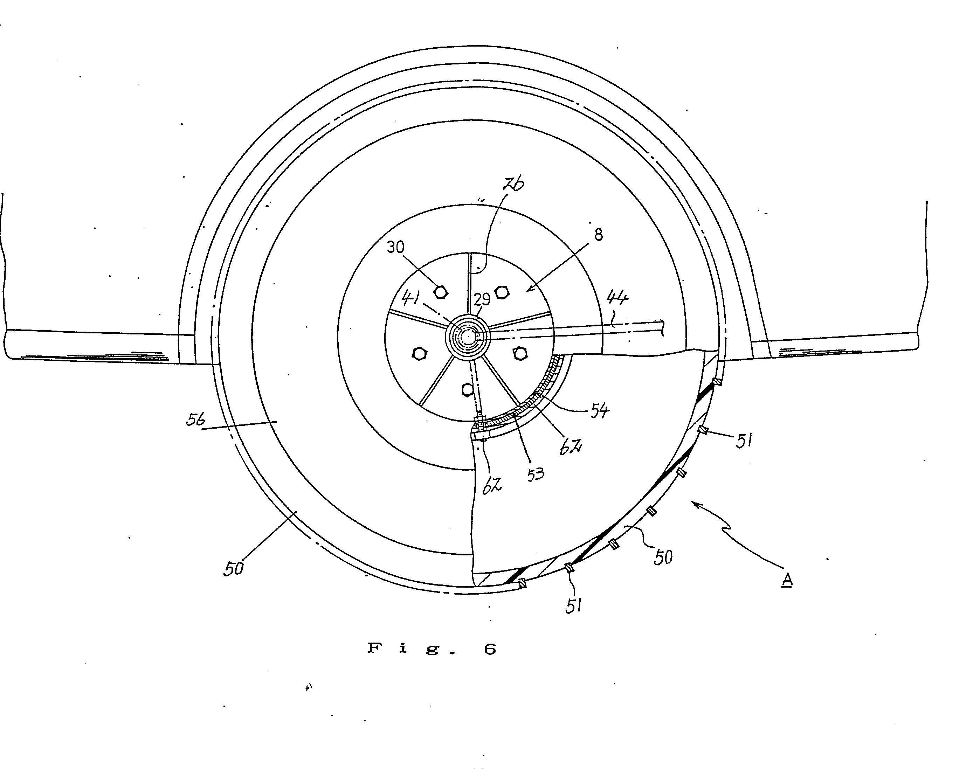

When the running shifts from on the road in the frozen state onto a road whose paved surface is exposed, the main switch 33 is switched off while continuing the running. As a result, the electromagnetic valve 37 recovers, so that the pressure tube 19 ( or 50 ), rotary joint 41, and atmosphere-communication port of the electromagnetic valve 37 come to communication with each other, and the compressed air inside the pressure tube 19 ( or 50 ) is exhausted to the atmosphere. Therefore, in the case of the first embodiment shown in Figs. 3 and 4, the operating levers 13 retract into the main casing 4 owing to the urging force of the springs 16. Also, in the case of the second embodiment shown in Figs. 5 and 6, the pressure tube 50 itself contracts and retracts inward to cause the spikes 51 embedded in the outer peripheral surface 50a to retract inward beyond the tread surface 2a of the tire 2. Consequently, the normal running using the tires 2 is allowed.

As will be apparent from the above, according to the present invention, the projection/retraction control of the spikes 15 or 51 of the spike device A can freely be achieved only by the switching operation of the main switch 33 that is effected in the inside of the vehicle, the work of exchanging the tires is completely unnecessary, and the dust pollution can never be caused by the spikes 15 or 51.

BRIEF DESCRIPTION OF THE DRAWINGS

All the drawings concern the present invention in which

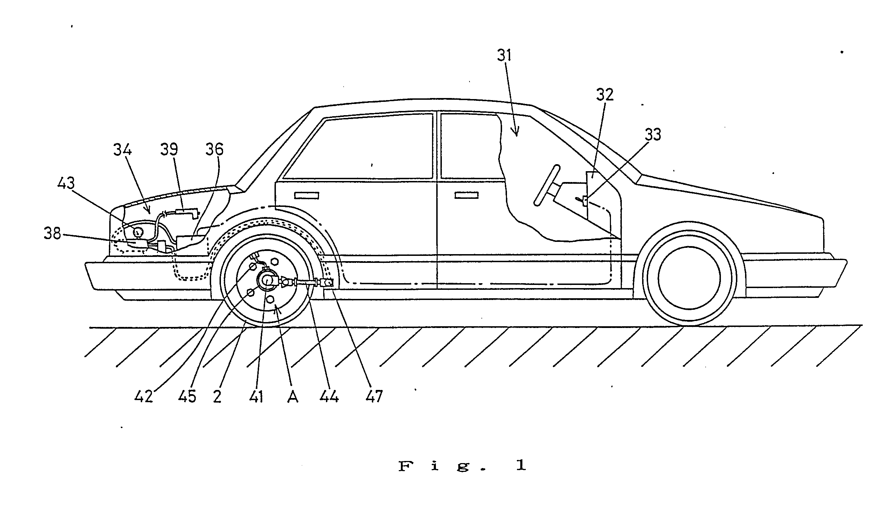

Fig. 1 is a side view, partly in cross section, of a first embodiment of a spike device equipped in a vehicle;

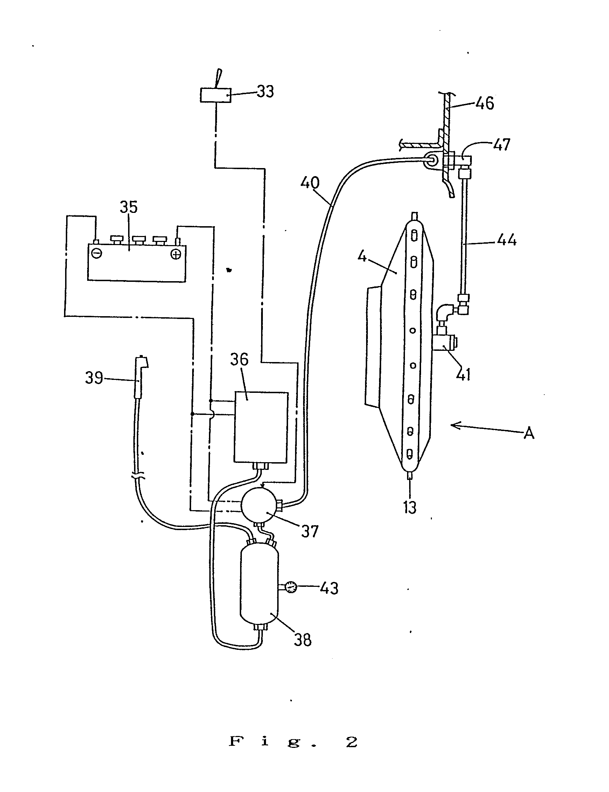

Fig. 2 is a system diagram of wiring and piping of an overall control mechanism;

Fig. 3 is a fragmentary vertical sectional view, as viewed from the rear of the vehicle, of the first embodiment attached to a wheel hub;

Fig. 4 is a side view, partly in cross section, corresponding to Fig. 3;

Fig. 5 is a fragmentary vertical sectional view, as viewed from the rear of the vehicle, of a second embodiment of the spike device attached to the wheel hub; and

Fig. 6 is a side view, partly in cross section, corresponding to Fig. 5

DESCRIPTION OF THE PREFERRED EMBODIMENTS

The composition of the present invention will now be described with reference to its embodiments illustrated in the drawings.

Figs. 1 through 4 concern a first embodiment of a spike device according to the present invention. Specifically, Fig. 1 is an overall side view showing the first embodiment A practically mounted on a vehicle, Fig. 2 is a diagram showing the wiring and piping of the device shown in Fig. 1, Fig. 3 is a sectional view, as viewed from the rear of the vehicle, of a wheel 3 and the spike device A taken along the center thereof, and Fig. 4 is a fragmentary enlarged sectional view. As shown in these drawings, the spike device A is attached together with the wheel 3 integrally to a wheel hub 1 on the outside thereof. On an instrument panel 32 provided on the side of a driver's seat in the inside 31 of the vehicle is disposed a main switch 33. In a trunk room 34 there are provided a compressor 36 and a three-port electromagnetic valve 37 being powered by a battery 35, an air tank 38 for reserving a compressed air supplied from the compressor 36, and an air injector 39 adapted for a tire 2 ( see Figs. 3 and 4 ). A light and miniature type capable of supplying a fresh air at a maximum pressure of $6Kg/cm^2$ to a water tank for goldfishes, for example, is adequate for use as the compressor 36. The compressor 36 includes a pressure switch ( not shown ) provided thereinside which is set such that it automatically turns on if the air pressure inside the air tank 38 decreases below a predetermined pressure ( for example, $3Kg/cm^2$ ) to increase the air pressure inside the air tank 38 up to a predetermined level ( for example, $6Kg/cm^2$ ). The compressed air from the compressore 36 is branched, after passing through the air tank 38, to the electromagnetic valve 37 and to the air injector 39. The electromagnetic valve 37 is connected via pipes 40 and 41, a rotary joint 41, and a connection pipe 42 to a pressure tube 19 of the spike device A. In Figs. 1 and 2, reference numeral 43 designates an air pressure meter of the air tank 38.

The spike device A is shown in Figs. 3 and 4 in enlarged scale. The spike device A comprises a main casing 4 whose diameter is smaller than the maximum outer diameter of the wheel 3 with an ordinary tire 2 ( such as the normal type or radial type ) attached thereto by a length of L x 2. Hence, the maximum outer diameter of the wheel 3 means the dimension measured from one tread surface 2a to another tread surface 2a of the tire 2. The main casing 4 has mounting holes 6 for wheel attaching bolts 5 bored therein, and comprises a concave section 8 having a face 7 coming into contact with an attaching face 1a of the wheel hub 1 and annular walls 9, 10, 11 and 12 of multilayer structure. By these annular walls the inside of the main casing 4 is divided into three doughnut-like chambers a,b and c whose outer diameters are large, medium and small, respectively.

In the inside of the main casing 4 are radially disposed 32 operating levers 13 in total which pass through the annular walls 9, 10 and 11. Each operating lever 13 has a spike 15 integrally formed at the distal end ( on the side of the outer periphery ) thereof, and a midway portion of each operating lever positioned inside the chamber a has a spring 16 provided therearound for always urging the operating lever in the retracting direction thereof ( toward the center ) with a force of 3Kg. Reference numeral17 designates a collar for receiving the spring coiled around the midway portion of each operating lever 13. The base end surface of each operating lever 13 has a planar disc 18 attached thereto by screwing, for example. This disc 18 is not always necessary and may be omitted. The chamber c defined by the annular walls 11 and 12 holds therein a pressure tube 19 into which the compressed air of up to 10Kg/cm² in pressure, for example, can be injected, and the outer peripheral surface of the pressure tube is held in contact with the disc 18 of each operating lever 13. Under the normal service condition, 2.5Kg/cm² is sufficient as the air pressure inside the pressure tube 19. As shown in Fig. 2, the pressure tube 19 has a valve 20 exposed in the inside thereof which passes through the annular wall 12 and a cover 21 hereinafter described. Each operating lever 13 can be assembled in by forming each through hole 22 in the respective annular walls and inserting it into the through hole while directing it from the concave section 8 to the outer periphery. Of course, in the course of insertion, the collar 17 and the spring 16 are attached within the chamber a. After insertion, the disc 18 is screwed within the chamber c.

In a central section of the main casing 4, the rotary joint 41 is secured to a cylindrical section of the cover 21, one end of the rotary joint being connected via the connection pipe 42 to the valve 20 of the pressure tube 19. The other end of the rotary joint 41 is connected via the connection pipes 44 and 40 to the electromagnetic valve 37. Specifically, the pipe 44 is connected with the pipe 40 via a coupling fixture 47 passing from outside a vehicle body 46 into a tire housing. This pipe 40 is piped along the inside surface of the tire housing, led into the trunk room 34 provided in the rear section of the vehicle, and connected to the electromagnetic valve 37.

In Fig. 3, reference numeral 23 designates a reinforcing plate for closing the chamber a of the main casing 4, 24 a cylinder for reinforcement of between the annular walls 10 and 11 and for guide of the operating lever 13, 25 a rubber member for covering an outer peripheral portion of the main casing 4, 21 a cover shaped so as to match with the exposed side surface ( the leftside surface in Fig. 3 ) of the main casing 4, and 26 a rib for reinforcing an inner concave section of the cover 26.

As shown in the drawings, the thus configured spike device A is disposed on the exposed or external side of the wheel 3 and integrally attached thereto together with the wheel 3 by clamping nuts 30 to the bolts 5 of the wheel hub 1. Because the maximum outer diameter of the spike device A under the condition that the compressed air inside the pressure tube 19 is exhausted is smaller than the maximum outer diameter of the wheel 3, the spike device A can easily be attached without need of jacking up the wheel 3. This attachment measure may also be implemented by forming outer threads on the outer periphery of each nut hitherto used to attach the wheel 3 and tightly screwing another nut on each threaded nut. That is, a so-called double-nut system widely used in attaching the wheels of a truck, for example, may be adopted. In the attached state, the maximum outer diameter of the main casing of the spike device A differs from that of the tread surface 2a of the tire 2 by a length L = 20mm in height. Also, between the inside surface of the wall 27 of the tire housing and the outermost portion of the spike device A is left a gap whose size D = 20mm. These exemplary dimensions D, L, etc. belong to the case of the Toyota "CROWN" equipped with the tires 2 whose tread width is 185mm and whose outer diameter is 14 inches.

The operation mode of the spike device A attached together with the wheel 3 to the wheel hub 1 in the manner above will now be described.

The case where the vehicle runs on the road in the frozen state will first be described. In this case, the main switch 33 of the driver's seat 31 is switched on to turn on the electromagnetic valve 37. As a result, the compressor 36 and the air tank 38 come to communication with each other, the rotary joint 41 and the pressure tube 19 come to communication with each other, and the compressed air is supplied from the air tank 38 through the pipes 40 and 44, the rotary joint 41, and the pipe 42 to the pressure tube 19. At the start, the compressed air having been reserved inside the air tank 38 is supplied. Then, if the air pressure inside the air tank 38 decreases below 3Kg/cm², the pressure switch provided inside the compressor 36 is switched on, so that the compressor 36 is automatically turned on to continuously replenish the air tank 38 with the compressed air. If the air pressure inside the air tank 38 increases above 6Kg/cm², the compressor 36 is automatically turned off as described above.

As illustrated in the upper half of Fig. 3 and in Fig. 4, in response to injection of the compressed air the pressure tube 19 pushes the operating levers 13 toward the outer periphery in opposition to the urging force (3Kg ) of the springs 16, so that each spike 15 provided at the distal end of each operating lever projects outward beyond the tread surface 2a of the tire 2 by a length ℓ. In this respect, even the air pressure inside the pressure tube 19 being only of the order of 2.5Kg/cm² can push the operating levers 13 toward the outer periphery as described above. The reason is because in the case of the radius of the disc 18 being 10mm, the area of the disc 18 is 3.14cm², the pushing force of the pressure tube 19 to be received by the disc or by the operating lever 13 is 7.85Kg, hence, this effective force is greater than the urging force of the spring 16 which is 3Kg. The extent of projection of the operating lever 13 is set to 25mm in this embodiment, hence, the aforementioned length ℓ by which the spike 15 projects beyond the tread surface 2a in the projected state becomes 5mm. Accordingly, in the thus attained state the vehicle can run on the road in the frozen state. That is, at the same time that the tread surface 2a of the tire 2 grips the road surface, the spikes 15 stick in the road surface in the frozen state to produce a large grip force. Therefore, the vehicle can safely run even on the road in the frozen state. Further, since the base end of each operating lever 13 is pushed by the pressure tube 19, the reciprocating action of the spike 15 caused depending upon the circumstances ( for example, irregularity ) of the road surface can be absorbed by the pressure tube 19, thereby resulting in the effect that vibration of the vehicle body can be suppressed.

On the other hand, when to run on the road whose surface is unfrozen with the spike device A mounted on the vehicle, the main switch 32 of the driver's seat 31 is switched off to turn off the electromagnetic valve 37. As a result, the pressure tube 19, rotary joint 41, and atmosphere-communication port ( not shown ) of the electromagnetic valve 37 come to communication with each other, and the compressed air inside the pressure tube 19 is exhausted to the atmosphere. The operating levers 13 are urged inward and retracted by the springs 16 provided inside the main casing 4, and the air inside the pressure tube 19 is forcibly exhausted to the atmosphere. Therefore, as illustrated in the lower half of Fig. 3, all the spikes 15 provided at the distal ends of the operating levers 13 are completely retracted into the main casing 4. Thus, the spikes 15 of the operating levers 13 cannot shave off asphalt, concrete, and the like on the road and there appears no problem of dust pollution and noise. Incidentally, the springs 16 act so as to suppress the projecting motion of the operating levers 13 which tends to appear due to a centrifugal force caused by the rotation of the main casing 4 during the running. Therefore, during the running on the road in the unfrozen state, the spikes is can never project beyond the tire tread surface 2a.

In case of burst of the tire 2, the rubber member 25 of the spike device A functions as a substitute for the tire 2, so that the safety at the time of tire burst can be ensured.

On the other hand, if the air injector 39 branched from the air tank 38 is used, it is possible to manually supply the compressed air through the valve 20 to the pressure tube 19 to thereby project/retract the operating levers 13 or the spikes 15 provided at the distal ends thereof. Of course, in case the air pressure inside the ordinary tire 2 becomes insufficient, it is also possible by the use of this air injector 39 to replenish the compressed air to recover the normal air pressure.

Figs. 5 and 6 show a second embodiment of the spike device A, in which Fig. 5 is a fragmentary vertical sectional view, as viewed from the rear of the vehicle, of the spike device A attached to the wheel hub 1 and Fig. 6 is a side view, partly in cross section, corresponding to Fig. 5. In this second embodiment, the spike device A comprises a main casing 52 whose diameter is smaller than the maximum outer diameter of the wheel 3 equipped with the ordinary tire 2 by a length of 2X. The main casing 52 is composed of an inner case 53 and an outer case 54. These inner and outer cases 53 and 54 have the mounting holes 6 for the wheel attaching bolts 5, similarly to the aforementioned first embodiment of Fig. 3. These inner and outer cases 53 and 54 further have the concave section 8 having the face 7 coming into contact with the attaching face 1a of the wheel hub 1, and annular side walls 55 and 56 perpendicular to the axial line of rotation of the wheel 3. The outer margins of these annular side walls 55 and 56 are not connected together. Accordingly, the outer peripheral section of the main casing 52 which comes to face opposite the ground has an annular opening 57 formed therein, and a space surrounded by these annular side walls 55 and 56 and annular bottom walls 58 and 59 defines an accommodatting room 60 for a pressure tube 50 hereinafter described.

The pressure tube 50 accommodated in the room 60 is of a special structure in this embodiment. Reference numeral 61 designates a rim and 62 a valve for injection/ exhaust of the compressed air. The outer peripheral surface ( the tread surface ) 50a of the pressure tube 50 has a plurality of spikes 52 projectingly formed thereon by an embedding process, for example.

The attaching process of the spike device A to the wheel hub 1 is the same as in the case of the aforementioned first embodiment shown in Figs. 3 and 4. Further, the composition of a control mechanism of the spike device A is fundamentally identical to the embodiment shown in Figs. 1 and 2.

The operation mode of the spike device A shown in Figs. 5 and 6 will now be described first with respect to the case of running on the road in the frozen state. The main switch 33 of the driver's seat 31 is switched on to turn on the electromagnetic valve 37. As a result, the compressor 38 and the air tank 38 come to communication with each other, and the rotary joint 41 and the pressure tube 50 come to communication with each other. Thus, the compressed air reserved inside the air tank 38 is supplied to the pressure tube 50. If the air pressure inside the pressure tube 50 decreases below 3Kg/cm$^2$, the pressure switch provided inside the compressor 36 is switched on, so that the compressor 36 is automatically turned on to continuously replenish the air tank 38 with the compressed air.

In response to injection of the compressed air the pressure tube 50 expands and projects toward the outer periphery as illustrated in the upper half of Fig. 5 and in Fig. 6, so that each spike 51 on the outer peripheral surface 50a projects outward beyond the tread surface 2a of the tire 2 by a length $\ell = 5mm$. Accordingly, as the vehicle runs in the thus attained state on the road in the frozen state, the tread surface 2a of the tire 2 grips the road surface and at the same time the spikes 51 stick in the road surface in the frozen state to produce a large grip force. That is, the vehicle equipped with the spike device A can safely run even on the road in the frozen state. Apparently, the annular side walls 55 and 56 of the inner and outer cases 53 and 54 act as to prevent rolling of the pressure tube 50 during the foregoing spike running.

On the other hand, when to run on the normal road whose surface is unfrozen with the spike device A mounted on the vehicle, the main switch 33 of the driver's seat 31 is switched off to turn off the electromagnetic valve 37. As a result, the pressure tube 50, rotary joint 41, and atmosphere-communication port ( not shown ) of the electromagnetic valve 37 come to communication with each other, and the compressed air inside the pressure tube 50 is exhausted to the atmosphere. Hence, as illustrated in the lower half of Fig. 5, the pressure tube 50 is contracted and partly retracted to the side of the room 60 of the main casing 52. Accordingly, each spike 51 formed on the outer peripheral surface 50a of the pressure tube 50 is retracted inward by a length $L = 20mm$ beyond the tread surface 2a of the tire 2. Therefore, even when running in the thus attained state on the normal road, the spikes 51 cannot shave off asphalt, concrete, and the like and there appears no problem of dust pollution and noise. Apparently, during the running on the normal road the annular side walls 55 and 56 of the inner and outer cases 53 and 54 serve to prevent rolling of the pressure tube 50.

Of course, the present invention should not be limited to the aforementioned embodiments, and appropriate modifications may be made. For instance, the spike device A can not only be applied to all types of vehicles, but also be attached to the wheel hub 1 on the internal side of the wheel depending upon the type of vehicle. The pressure tube 19 of the first embodiment shown in Figs. 3 and 4 may be implemented using any tire on the market. The spike 15 may be molded integrally with the operating lever 13, or these two members may be assembled together by screwing one to the other, for example, after preparing them as independent parts. The number of operating levers 13 may appropriately be changed depending upon the type of vehicle. The spring 16 may be omitted. In this case of the spring 16 being omitted, each spide 15 can freely retract inward as it comes to contact with the road surface even when running on the road in the unfrozen state, and no large impact force is applied to the road surface. However, it is unavoidable to apply an impact to some extent, hence, this modification is rather unfavourable. Depending upon the performance of the compressor 36, the air tank 38 may be omitted and the compressor 36 may be connected directly with the electromagnetic valve 37. The main switch 33 may be of the three-position type wherein a first switch position connects the compressor 36 and the electromagnetic valve 37 to the battery 35 to put them in operation and second and third switch positions turn on/off the compressor 36 and the electromagnetic valve 37. The setting pressure of the compressor 36 and of the air tank 38 may appropriately be changed depending upon the type of vehicle, for example, by interposing a pressure valve of given pressure at a midway point of the pipe line between the air tank 38 and the pressure tube 19. Although in the embodiments the compressor 36, electromagnetic valve 37, and air tank 38 are described as being disposed inside the trunk room 34, these parts may be disposed, for example, in a space under the passenger's seat of the vehicle because they all are light and small-sized.

As described hereinabove, according to the present invention, the spikes of the spike device can be controlled so as to project and retract only by operating the main switch in the inside of the vehicle, hence, the troublesome work of stopping the vehicle at the roadside and exchanging the respective tires through a jacking-up step, as performed in the prior art, is completely unnecessary. Accordingly, when going and coming along both a road in the frozen state and another road whose paved surface is exposed, the projection/retraction control of the spikes can very simply and easily be achieved even by a woman, an aged or sickly person, etc., hence, the present invention is very convenient. The overall composition of the control mechanism of the spike device is simple and each part is very light and small-sized, thus, the spike device can be mounted on any vehicles being on the market through a simple work. Further, because of the spikes being retractable, when to run on the road in the frozen state it is possible to get a large grip force by projecting the spikes beyond the tire tread surface. On the contrary, when to run on the road in the unfrozen state the spikes can be retracted inward, thus, asphalt and the like on the road surface cannot be shaved off, thereby solving the problem of dust pollution and noise. In addition, the spike device can easily be attached without need of jacking up the vehicle body and the vehicle with the spike device mounted thereon can run normally, hence, the present invention is very convenient.

## Claims

1. A spike device comprising;
a main casing attached together with a wheel integrally to a wheel hub,
a rim provided inside the main casing,
a pressure tube attached to the rim inside the main casing, and
a plurality of spikes radially provided outside the peripheral surface of the pressure tube,
wherein the spikes project a little outward beyond the tire tread surface of the wheel when a compressed air is supplied to the pressure tube and retract inward beyond the tire tread surface of the wheel when the compressed air in the pressure tube is exhausted.

2. A spike device according to claim 1, wherein
the main casing has a plurality of doughtnut-like chambers formed by annularly dividing the inside of the main casing,
the pressure tube is held inside an inner annular chamber,
a plurality of operating levers are held inside an outer annular chamber while always being urged inward,
the spikes are attached to the distal ends of the respective operating levers and exposed externally, and
the base ends of the respective operating levers are held in contact with the pressure tube.

3. A spike device according to claim 2, wherein the outer peripheral surface of the main casing is covered with a rubber member, and the operating levers pass through the rubber member and are exposed externally.

4. A spike device according to claim 1, wherein the outer peripheral surface of the pressure tube is directly exposed externally from the main casing, and the spikes are integrally attached to the outer peripheral surface of the pressure tube.

5. In a spike device for vehicles comprising a main casing with a rim attached together with a wheel integrally to a wheel hub, a pressure tube attached to the rim inside the main casing, and a plurality of spikes provided outside the peripheral surface of the pressure tube, a control mechanism comprising;

a compressor,

an electromagnetic valve controlled on/off by a main switch provided in the inside of a vehicle for controlling supply of a compressed air given from the compressor, and

a rotary joint fixed in a central section of the main casing whose one end is connected with the pressure tube with the other end connected with the electromagnetic valve, wherein the compressed air pressure inside the pressure tube is controlled through the switching operation of the main switch.

Fig. 1

0236041

Fig. 2

Fig. 3

Fig. 4

Fig. 5

Fig. 6

0236041